# EUROPEAN PATENT APPLICATION

(11) **EP 4 614 042 A1**
(43) Date of publication of application: **10.09.2025**
(21) Application number: 25158786.1
(22) Date of filing: 19.02.2025
(51) Int. Cl.: F16K 31/02, F16K 31/524, F16K 31/60, F24D 19/10

(54) **ELECTROTHERMAL ACTUATOR FOR HYDRAULIC MANIFOLDS AND HYDRAULIC DISTRIBUTOR PROVIDED WITH SUCH ACTUATOR**

(30) Priority: 07.03.2024 IT 202400005134
(71) Applicant: Pres-Block S.P.A., 10040 Caselette (IT)
(72) Inventor: NICOLINO, Aldo, 10040 Caselette (TO) (IT); MONTAGONO, Massimiliano, 10040 Caselette (TO) (IT)
(74) Representative: Studio Torta S.p.A.

(57) **Abstract**

Electrothermal actuator (1) for hydraulic manifolds comprising: a rigid casing (2) provided with a connection interface (10), which is adapted to couple to said hydraulic manifold (100) at the stem to be moved (106), so as to rigidly secure the electrothermal actuator (1) to the hydraulic manifold (100); a piston (3), which is axially movable inside the rigid casing (2) between a forward position and a backward position, and is adapted to place its front part in abutment on the stem to be moved (106); a stroke limiter (4), which is axially movable inside the rigid casing (2), behind the piston (3), and is adapted to limit the axial stroke of said piston (3); an elastic member (5), which is adapted to maintain, in elastic manner, said stroke limiter (4) in a first operating position, in which it prevents said piston (3) from axially moving from said forward position to said backward position; a thermosensitive capsule (6), which is adapted to axially move, when expanding, said stroke limiter (4) away from said first operating position; and a manually-operated piston unlocking device (8), which is at least partially accommodated within said rigid casing (2) and is adapted to move axially said stroke limiter (4) between said first operating position, and a second operating position which allows said piston (3) to move back and forth between said forward position and said backward position.

## Description

### CROSS-REFERENCE TO RELATED APPLICATIONS

This application claims priority of the Application of Italian Patent No. 102024000005134 filed on March 7, 2024, the disclosure of which is herein incorporated by reference.

### TECHNICAL FIELD

The present invention relates to an electrothermal actuator for hydraulic manifolds and to a hydraulic distributor provided with such actuator.

More specifically, the present invention relates to an electrothermal actuator for distribution manifolds of domestic heating systems. Use to which the following disclosure will explicitly refer without thereby losing generality.

### STATE OF THE ART

As is known, most of domestic heating systems usually comprise: a series of radiators and/or other type of heat exchangers suitably distributed within the house to be heated; a boiler capable of producing hot water to be circulated within the various radiators and/or the like; a hydraulic circuit that connects the (cold) water inlet and the (hot) water outlet of the boiler to the various radiators and/or the like of the heating system; and at least one electric circulation pump, which is adapted to circulate water within the hydraulic circuit.

In more recent domestic heating systems, the hydraulic circuit usually includes: a delivery hydraulic manifold, which is interposed between the (hot) water outlet of the boiler and the various radiators and/or the like of the heating system, and is adapted to distribute the hot water to the individual branches of the hydraulic circuit with predetermined flowrates for the individual branches; and a return hydraulic manifold, which is interposed between the (cold) water inlet of the boiler and the various branches of the hydraulic circuit of the heating system, and is adapted to channel the water coming from the various radiators and/or the like of the heating system towards the boiler.

In order to facilitate maintenance of the heating system, the return hydraulic manifold is generally also structured so as to selectively manually closed/isolated each branch of the hydraulic circuit, without cutting off the water circulation in the remaining branches of the hydraulic circuit.

In more detail, the return hydraulic manifold generally comprises: an oblong and rectilinear-shaped, valve body, which is internally hollow and has, at one of the two axial ends, an outlet mouth through which water can flow out of the valve body towards the boiler, and moreover has a series of lateral inlet mouths, which are spaced along the entire length of the valve body and allow water from the various branches of the hydraulic circuit to enter the valve body; a series of movable plugs, which are placed inside the valve body, each in front of a respective inlet mouth of the valve body, and are rectilinearly movable to and from a closed position in which they engage the facing inlet mouth of the valve body in fluid-tight manner; and a series of counter springs, which are coupled to the various movable plugs so as to elastically counteract the movement of the individual movable plugs in the relative closed position.

In other words, the counter springs keep the inlet mouths of the valve body open.

The plumber thus can, at his discretion, close/isolate any branch of the hydraulic circuit separately from the others by moving and stably locking the corresponding movable plug in the closed position.

Clearly, the movement of the movable plug into the closed position is done manually by overcoming the elastic thrust of the corresponding counter spring.

More specifically, each movable plug usually has a rear straight stem, which protrudes cantilevered out of the valve body from the opposite side of the corresponding valve-body inlet mouth, and can move axially with respect to the valve body between an extracted and a retracted position.

When the straight stem of the movable plug is in the retracted position, the movable plug is in the closed position, i.e. it fluid-tightly obstructs the facing inlet mouth of the valve body. When the straight valve stem is in the extracted position, the movable plug is at maximum distance from the facing inlet mouth of the valve body, so that water can flow through the same inlet mouth.

The plumber can close/isolate any branch of the hydraulic circuit by manually screwing on the valve body of the hydraulic manifold a retaining screw cap, which covers the part of the straight stem that cantilevered protrudes outside of the valve body, and at same time pushes and locks the straight stem in the retracted position overcoming the thrust of the counter spring.

To improve the efficiency of this type of heating system, recently there have been marketed electrothermal actuators that are capable of transforming the return hydraulic manifold into an electrically-controlled hydraulic distributor that is adapted to be commanded by one or more programmable chrono-thermostats or similar devices.

More specifically, these electrothermal actuators are structured so as to be attached to the valve body of the hydraulic manifold in place of the traditional retaining caps, and are capable of moving, on command, the respective movable plugs to and from the closed position.

In other words, each electrothermal actuator is secured to the valve body to cover the part of the straight stem that protrudes cantilevered outside of the valve body, and is capable to exert, on command and on the distal end of the straight stem, an axial thrust that moves the straight stem to the retracted position by overcoming the elastic thrust of the counter spring.

To maximise the energy efficiency of the heating system, moreover, the various inlet mouths of the electrically-controlled hydraulic distributor, or rather of the hydraulic manifold equipped with electrothermal actuators, must be/remain normally closed.

As a consequence, each electrothermal actuator is specifically structured to maintain, when it is completely de-energised or inactive, the corresponding straight stem stably in the retracted position, obviously overcoming the elastic thrust of the counter spring.

More specifically, this type of electrothermal actuators usually comprises: a thermo-sensitive capsule which expands and contracts depending on its internal temperature, and is capable to maintain, when at ambient temperature, the straight stem of the movable plug stably in the retracted position overcoming the elastic thrust of the counter spring; and a resistor, which is capable of heating, when an electric current is passed through it, the thermo-sensitive capsule so that the latter allows the straight stem to move to the retracted position by means of the elastic thrust of the counter spring alone.

Unfortunately, the presence of the thermo-sensitive capsule causes great problems during the mounting of the electrothermal actuator on the hydraulic manifold, because it forces the plumber to manually and forcefully press the electrothermal actuator against the valve body of the hydraulic manifold, in order to push the straight stem into the retracted position by overcoming the elastic thrust of the counter spring.

This operation can occasionally put bending stress on the straight stem of the movable plug thus damaging the annular sealing gaskets, and/or can damage the internal thread of the locking ring-nut that secures the electrothermal actuator to the valve body of the hydraulic manifold, with all the problems this entails.

### SUMMARY OF THE INVENTION

Aim of the present invention is that of realising an electrothermal actuator simpler and quicker to assemble than those currently on the market, which in addition is also compact and cheap to manufacture.

In accordance with these aims, according to the present invention there is realized an electrothermal actuator as defined in claim 1 and preferably, though not necessarily, in any one of the claims dependent thereon.

In addition, according to the present invention, there is also realized an electrically-controlled hydraulic distributor as defined in claim 16 and preferably, though not necessarily, in any one of the claims dependent thereon.

### BRIEF DESCRIPTION OF THE FIGURES

The present invention will now be described with reference to the accompanying drawings, which illustrate a non-limiting embodiment thereof, wherein:
- Figure 1 is a perspective view, with parts removed for clarity's sake, of a hydraulic distributor provided with electrothermal actuators realized according to the teachings of the present invention;
- Figure 2 is a front view of the hydraulic distributor shown in Figure 1, sectioned along the midplane and with parts removed for clarity's sake;
- Figure 3 is an exploded perspective view of the electrothermal actuator shown in Figures 1 and 2, with parts removed for clarity's sake;
- Figure 4 is a front view of the electrothermal actuator shown in the previous figures, sectioned along the midplane and in a second operating configuration;
- Figure 5 is a front view of the electrothermal actuator shown in the previous figures, sectioned along the midplane and in a third operating configuration; whereas
- Figures 6 and 7 are perspective views of the electrothermal actuator shown in the previous figures, in two different operating configurations.

### DETAILED DESCRIPTION OF THE EMBODIMENTS

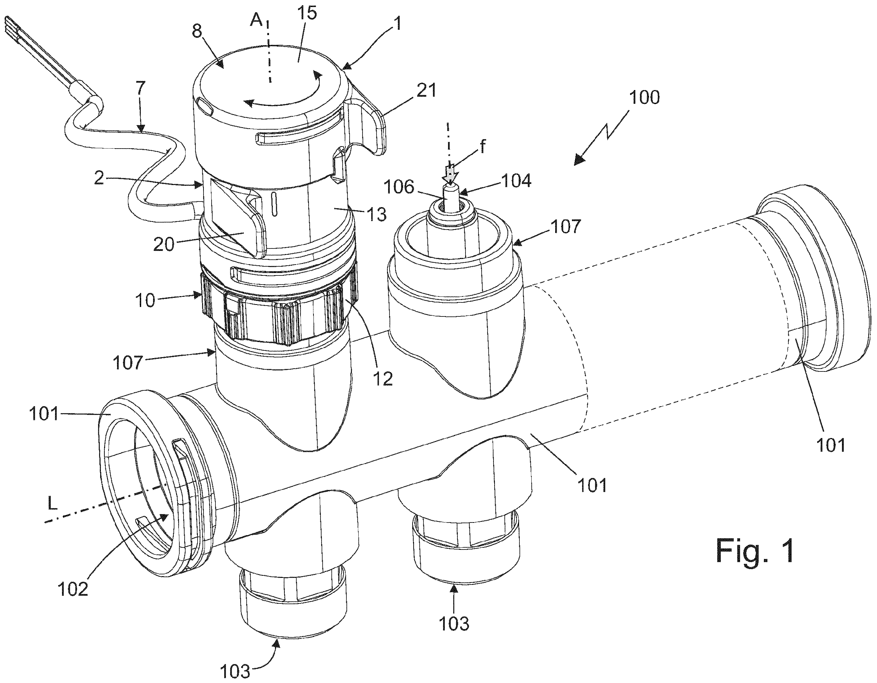

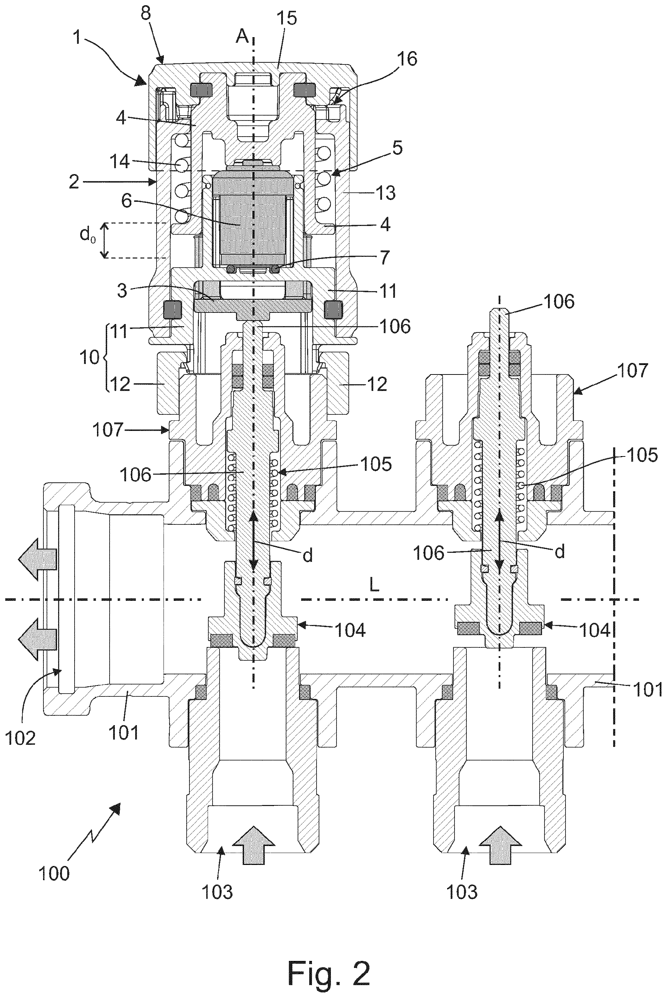

With reference to Figures 1 and 2, number 1 denotes as a whole an electrothermal actuator, which is particularly adapted to be fitted on a hydraulic manifold 100 for domestic heating systems and the like, so as to realize an electrically-controlled hydraulic distributor, advantageously controllable by a programmable chrono-thermostat or other electronic control device.

More in detail, the hydraulic manifold 100 is provided with a plurality of independent water inlets, each of which is preferably adapted to be connected to a piping (not shown) that collects the (cold) water or other heat-transfer liquid exiting from one or more radiators and/or other heat exchangers belonging to the heating system; and with a common water outlet, which in turn is preferably adapted to be connected to the piping that channels the (cold) water or other heat-transfer liquid to the (cold) water inlet of the boiler of the heating system, or other equipment capable of heating the flow of water or other heat-transfer liquid passing through the same equipment.

The hydraulic manifold 100 is moreover provided, for each water inlet, with a respective movable plug, which is capable of rectilinearly moving within the hydraulic manifold 100 to and from a closed position in which the body of the movable plug substantially fluid-tightly obstructs the corresponding water inlet.

The electrothermal actuator 1, in turn, is adapted to be secured in rigid manner to the hydraulic manifold 100, aligned to a (single) movable plug of the hydraulic manifold 100, and is structured so as to rectilinearly move/shift, on command, said movable plug to and from the related closed position.

In addition, the electrothermal actuator 1 is electrically operated and is structured so as keep, when it is completely de-energised or inactive, the corresponding movable plug stably in said closed position.

In other words, the electrothermal actuator 1 is controllable by a conventional programmable chrono-thermostat (not shown) or other electronic control device, and is structured so as to keep the corresponding movable plug stably in the closed position, advantageously without electricity consumption.

The electrically-controlled hydraulic distributor, therefore, advantageously consists of the hydraulic manifold 100 and at least one electrothermal actuator 1 fitted to the hydraulic manifold 100 so that it can, on command, rectilinearly move/ shift a (single) movable plug to and from the related closed position.

Clearly, the electro-controlled hydraulic manifold could be provided with a plurality of electrothermal actuators 1, each secured to the hydraulic manifold 100 aligned to a respective movable plug of the hydraulic manifold 100.

More specifically, the electrically-controlled hydraulic distributor may be conveniently provided with an electrothermal actuator 1 for each movable plug of the hydraulic manifold 100.

With reference to Figures 1 and 2, in particular, the hydraulic manifold 100 preferably comprises: an advantageously oblong-shaped, valve body 101 that is internally hollow and is provided with an outlet mouth 102 preferably located at one end of the same valve body 101, and a plurality of inlet mouths 103, which are suitably spaced along the entire length of the valve body 101; and a plurality of movable plugs 104, which are placed within the valve body 101, each close to a respective inlet mouth 103 of the valve body 101, and are movable separately from one another to and from a closed position (see Figure 1) wherein they reach and engage each the corresponding inlet mouth 103 of the valve body 101, substantially obstructing it fluid-tightly.

The outlet mouth 102 of valve body 101 corresponds to the common water outlet of hydraulic manifold 100, whereas each inlet mouth 103 of valve body 101 corresponds to a water inlet of hydraulic manifold 100.

More specifically, each movable plug 104 is arranged within the valve body 101 locally aligned to the related inlet mouth 103 of valve body 101, and is rectilinearly movable within the valve body 101 to and from the same inlet mouth 103 in a direction d locally transversal to the valve body 101.

Clearly, each movable plug 104 is capable of moving back and forth in direction d until up to reach and substantially fluid-tightly engage the corresponding inlet mouth 103 of valve body 101.

In other words, each movable plug 104 is preferably coupled/fixed to the valve body 101 in an axially slidable manner, so as to freely move, within the valve body 101, in direction d up to reach and engage the corresponding inlet mouth 103 of the valve body 101.

Each movable plug 104 is therefore movable back and forth between said closed position wherein the body of the movable plug 104 substantially fluid-tightly obstructs the facing inlet mouth 103 of valve body 101, and a (fully) opened position in which the movable plug 104 does not engage the facing inlet mouth 103, or rather is at a predetermined (maximum) distance from said inlet mouth 103, so as to allow water or other heat-transfer liquid to freely flow through the inlet mouth 103.

With reference to Figure 2, in addition, the hydraulic manifold 100 preferably also comprises, for each movable plug 104, a respective elastic counter member 105, which is capable of elastically counteracting the shifting/movement of the movable plug 104 towards the related closed position.

More specifically, each elastic counter member 105 is preferably interposed between the valve body 101 and the related movable plug 104, so as to bring and elastically maintain the same movable plug 104 in the (fully) opened position.

With reference to Figures 1 and 2, in particular, the valve body 101 is preferably substantially straight and is preferably made of plastic or metal.

Additionally, the various inlet mouths 103 are advantageously arranged along a same side of the valve body 101 spaced side by side to one another. Preferably, the inlet mouths 103 are moreover spaced substantially evenly along the valve body 101.

Each movable plug 104 of hydraulic manifold 100, on the other hand, is preferably placed within the valve body 101 spaced in front of the corresponding inlet mouth 103 of the valve body 101 perpendicular to the longitudinal axis L of the valve body 101, and is coupled/fixed to the valve body 101 in axially slidable manner, so as to rectilinearly move to and from the facing inlet mouth 103 of valve body 101 in a direction d substantially perpendicular to the longitudinal axis L of valve body 101.

With reference to Figures 1 and 2, in addition each movable plug 104 is provided with an actuating straight stem 106, which extends parallel to the displacement direction d of the movable plug 104, and protrudes cantilevered and stably outside the valve body 101, from the side opposite to the related inlet mouth 103 of valve body 101, engaging in axially slidable manner the wall of valve body 101.

More in detail, the straight stem 106 of movable plug 104 also substantially fluid-tightly engages the wall of valve body 101.

Preferably, the straight stem 106 of movable plug 104 moreover juts out cantilevered from valve body 101 roughly in the centre of a protrusion 107 advantageously substantially cylindrical in shape, which in turn protrudes cantilevered from the longitudinal rectilinear segment of valve body 101, from the opposite side with respect to the inlet mouth 103 intended to be closed by the movable plug 104, and is structured so as to be engaged/engageable in a rigid and stable, though easy removable, manner indifferently by a traditional retaining cap with cup structured (not shown) or by an electro-thermic actuator 1.

With reference to Figures 1 and 2, the straight stem 106 of movable plug 104 is thus axially movable relative to the valve body 101 between a retracted position and an extracted position. Preferably, the axial stroke between the retracted position and the extracted position is also less than 20 mm (millimetres) and advantageously greater than 3-4 mm.

In the retracted position the length of segment of the straight stem 106 protruding cantilevered outside the valve body 101 assumes the minimum value. In the extracted position, on the other hand, the length of segment of the straight stem 106 protruding cantilevered outside the valve body 101 assumes the maximum value.

When the movable plug 104 is in the closed position, i.e. substantially fluid-tightly engages the corresponding inlet mouth 103 of valve body 101, the related straight stem 106 is in the retracted position.

When the movable plug 104 is in the (fully) opened position, i.e. it is spaced apart from the corresponding inlet mouth 103 of valve body 101, the related straight stem 106 is in the extended position.

With reference to Figure 2, each elastic counter member 105, in turn, is adapted to bring and elastically maintain the straight stem 106 of the related movable plug 104 in the extracted position.

More in detail, each elastic counter member 105 preferably includes a coil spring, which is fitted on the straight stem 106 of the movable plug 104, advantageously within the valve body 101, so as to counteract the axial displacement of the straight stem 106 from the extracted position to the retracted position .

In other words, the coil spring is interposed between the valve body 101 and the movable plug 104, or rather the straight stem 106 of the movable plug 104, so as to be compressed when the straight stem 106 moves from the extracted position to the retracted position, i.e. when the movable plug 104 moves from the (fully) opened position to the closed position.

Preferably, the coil spring is moreover pre-compressed so as to allow the movement of the straight stem 106 of the movable plug 104 into the retracted position, and thus the movement of the whole movable plug 104 into the closed position, only when the axial force f exerted on the straight stem 106 exceeds a predetermined minimum value.

With reference to Figures 1 to 7, the electrothermal actuator 1 is adapted to be fixed in rigid manner to the valve body 101 of hydraulic manifold 100, so as to be locally aligned to the straight stem 106 of a movable plug 104 of hydraulic manifold 100.

More specifically, the electrothermal actuator 1 is oblong and advantageously also roughly cylindrical in shape, and is preferably structured so as to be secured in a rigid and, advantageously, also easy removable manner, on the valve body 101 of hydraulic manifold 100, while remaining locally substantially coaxial to the longitudinal axis of the straight stem 106 to be actuated.

In other words, the electrothermal actuator 1 is preferably structured so as to be firmly secured to the valve body 101 with its longitudinal axis A substantially coincident, or anyway substantially parallel, to the longitudinal axis of the straight stem 106 to be actuated/moved.

In addition the electrothermal actuator 1 is structured to exert, preferably when inactive and/or de-energized, on the straight stem 106 to which it is aligned, or more conveniently on the distal end of the straight stem 106 to which it is aligned, an axial force f which is capable of moving and maintaining the straight stem 106 in the retracted position and, thus, the whole movable plug 104 in the closed position, advantageously overcoming the elastic thrust of the elastic counter member 105 acting on the same movable plug 104.

More specifically, the electrothermal actuator 1 is preferably adapted to be fixed, advantageously in an easily removable manner, on the protrusion 107 of valve body 101 surrounding the straight stem 106, so as to form an extension of the same protrusion 107.

Preferably, the electrothermal actuator 1 is moreover structured so as to cover and conceal the segment of the straight stem 106 protruding cantilevered outside the valve body 101.

With reference to Figures 1 to 7, in particular the electrothermal actuator 1 comprises: a rigid outer casing 2 advantageously of oblong shape, which is provided with a connection interface adapted to couple to the hydraulic manifold 100, or rather to valve body 101, at the stem 106 to be moved, so as to secure the electrothermal actuator 1 in rigid manner to the hydraulic manifold 100; and a movable piston 3, which is adapted to be arranged with its front part in abutment against the stem 106 to be moved, and is accommodated in axially slidable manner within the rigid casing 2 between a forward position and a backward position.

In the forward position, the moving piston 3 is capable of arranging the straight stem 106 to be moved in the retracted position. In the backward position, instead, the movable piston 3 is capable of arranging the straight stem 106 to be moved in the extracted position.

More in detail, the connection interface is adapted to couple to the hydraulic manifold 100, or rather to the valve body 101, at the straight stem 106 to be moved, so as to secure the electrothermal actuator 1 in rigid manner to the hydraulic manifold 100, and at the same time also to arrange the electrothermal actuator 1 with its longitudinal axis A locally substantially coaxial or in any way parallel to the straight stem 106 to be moved.

The movable piston 3, on the other hand, is movable back and forth parallel to the longitudinal axis A. Preferably, the movable piston 3 is moreover accommodated in axially movable manner within the connection interface of the rigid casing 2.

The electrothermal actuator 1 additionally comprises: a stroke limiter 4, which is accommodated in axially slidable manner within the rigid casing 2, behind the movable piston 3, so as to limit the axial stroke of the movable piston 3; and an elastic counter member 5, which is accommodated within the rigid casing 2 and is adapted to maintain, in elastic manner, the stroke limiter 4 in a first operating position (see figure 2) which prevents the piston 3 from axially moving (move back) from the forward position to the backward position.

More in detail, the stroke limiter 4 is movable behind the piston 3 parallel to longitudinal axis A, to and from said first operating position. The rear part of the movable piston 3 is adapted to abut on the stroke limiter 4, whereas the elastic member 5 is adapted to elastically counteract any displacement of the stroke limiter 4 from said first operating position.

The elastic member 5, therefore, is indirectly adapted to elastically counteract any movement of the movable piston 3 from the forward position to the backward position.

More specifically, the elastic member 5 is adapted to maintain, in elastic manner, the stroke limiter 4 at a predetermined minimum axial distance d₀ from the connection interface of rigid casing 2 accommodating the piston 3.

The elastic counter member 5, in addition, is preferably structured and dimensioned so as to stably hold any straight stem 106 of hydraulic manifold 100 in the related retracted position, by overcoming the elastic thrust of the elastic counter member 105 acting on the same stem.

Again within the rigid casing 2, the electrothermal actuator 1 further comprises: a thermo-sensitive capsule 6, which expands and contracts according to its internal temperature, and is adapted to axially move, when it expands, the stroke limiter 4 away from said first operating position; and an electro-controlled heating device 7, which is adapted to heat, on command, the thermo-sensitive capsule 6 so as to cause its expansion.

More in detail, the thermo-sensitive capsule 6 is preferably interposed between the rigid casing 2 and the stroke limiter 4, on the opposite side with respect to the elastic member 5. In addition, the thermo-sensitive capsule 6 is capable of moving, when in the fully expanded configuration, the stroke limiter 4 away from the first operating position so as to allow the movable piston 3 to freely slide back and forth up to the backward position.

In other words, the thermo-sensitive capsule 6 is adapted to selectively bring the stroke limiter 4 to an axial distance d₁ from the connection interface of rigid casing 2 greater than the minimum axial distance d₀, overcoming the thrust of the elastic member 5.

Preferably, the expansion of the thermo-sensitive capsule 6 is also capable of imparting, to the stroke limiter 4, an axial displacement greater than or equal to the axial stroke normally required to move the straight stem 106 of the hydraulic manifold 100 from the extended position to the retracted position and vice versa.

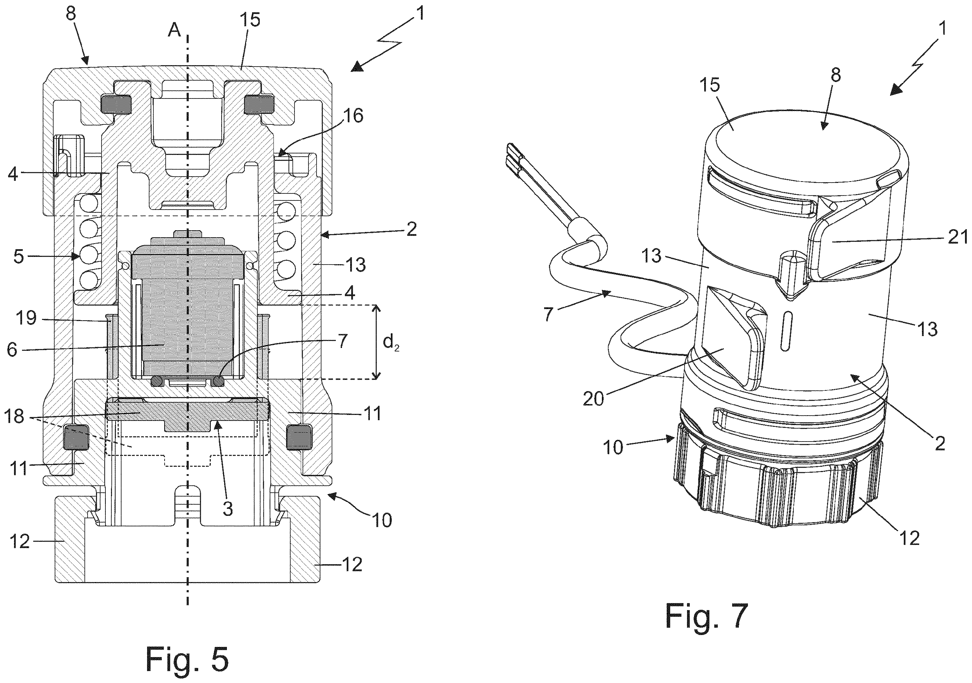

With reference to Figures 1 to 7, in addition, the electrothermal actuator 1 is moreover provided with a manually-operated, piston unlocking device 8, which is at least partially accommodated within the rigid casing 2, and is selectively adapted to axially move the stroke limiter 4 between said first operating position, and a second operating position (see figure 5) that allows the piston 3 to freely move back and forth between the forward and the backward position.

In other words, the piston unlocking device 8 is selectively adapted to bring the stroke limiter 4 to an axial distance d₂ from the connection interface of rigid casing 2 greater than the minimum axial distance d₀ and preferably also greater than the axial distance d₁, overcoming the thrust of elastic member 5.

More in detail, the piston unlocking device 8 is preferably interposed between the rigid casing 2 and the stroke limiter 4, and is structured so as to assume, on choice and alternatively, a first stable configuration in which it arranges the stroke limiter 4 in the first operating position, and a second stable configuration in which it arranges the stroke limiter 4 in the second operating position, so as to allow the movable piston 3 to freely move back and forth between the forward and backward positions, irrespective of the status of the thermo-sensitive capsule 6.

With reference to Figures 1 to 7, in particular, the rigid casing 2 of electrothermal actuator 1 is preferably substantially cylindrical in shape, and is preferably provided, at one end, with a connecting structure 10, which is adapted to couple to the hydraulic manifold 100, or rather to the valve body 101, at the stem 106 to be moved, so as to rigidly secure the electrothermal actuator 1 to the hydraulic manifold 100.

In addition, the connecting structure 10 is also adapted to arrange and maintain the electrothermal actuator 1 with its longitudinal axis A locally substantially coaxial to the straight stem 106 to be moved.

The movable piston 3, in turn, is preferably accommodated within the connecting structure 10 in axially slidable manner.

More in detail, the connecting structure 10 is preferably substantially bell-shaped, and is adapted to be rigidly secured to the valve body 101, or rather fitted onto the protrusion 107 of valve body 101, with the concavity turned towards the valve body 101, as to accommodate within itself the segment of the straight stem 106 protruding cantilevered outside the valve body 101.

The movable piston 3, in turn, is preferably accommodated in axially slidable manner within the central cavity of the bell-shaped connecting structure 10.

More in detail, the connection structure 10 of rigid casing 2 preferably comprises: an advantageously substantially cylindrical-shaped, a cup body 11 which extends coaxial to the longitudinal axis A and accommodates within itself the movable piston 3; and a locking ring-nut 12, which is fixed to the cup body 11 with the capability of freely rotating about longitudinal axis A, and is adapted to be screwed onto the valve body 101, or rather onto the protrusion 107 of valve body 101, so as to hold the cup body 11 firmly in abutment against the valve body 101, with the concavity facing the same valve body 101.

In addition, the rigid casing 2 of the electrothermal actuator 1 also comprises a protruding tubular sleeve 13, advantageously substantially cylindrical in shape, which extends substantially coaxial to the longitudinal axis A, so as to be locally aligned, or rather coaxial, to the stroke limiter 4. Preferably, the tubular sleeve 13 further accommodates within itself the stroke limiter 4 and the elastic member 5.

More specifically, the protruding tubular sleeve 13 is preferably integral with, and rises from, the connecting structure 10 while remaining substantially coaxial to the longitudinal axis A.

Preferably the cup body 11, the locking ring-nut 12 and the tubular sleeve 13 are thus aligned along the longitudinal axis A, and more advantageously are coaxial to longitudinal axis A.

In addition, the tubular sleeve 13 is preferably a distinct and separate piece from cup body 11, and is rigidly fitted on top of the same cup body 11. Preferably, the cup body 11 and/or the locking ring-nut 12 and/or the tubular sleeve 13 are moreover made of plastic material.

With reference to Figures 2, 3, 4 and 5, in addition, the stroke limiter 4 preferably has a substantially bell structure, advantageously substantially cylindrical in shape, and is accommodate in axially slidable manner within the rigid casing 2, or rather within the tubular sleeve 13, with the concavity turned towards the connecting structure 10, or rather towards the cup body 11.

The thermo-sensitive capsule 6, in turn, is preferably housed within the cavity of stroke limiter 4 with the bell structure .

More in detail, the stroke limiter 4 with bell structure is preferably fitted in telescopic and axially slidable manner on a protruding tubular collar, advantageously substantially cylindrical, which extends cantilevered from the top of the connecting structure 10, or rather from the top of cup body 11, inside the tubular sleeve 13, advantageously while remaining substantially coaxial to the longitudinal axis **A.**

The thermo-sensitive capsule 6, in turn, is preferably accommodated within said tubular collar.

Preferably, the thermo-sensitive capsule 6 is thus accommodated inside the rigid casing 2 substantially coaxial to the longitudinal axis **A.**

Advantageously, the movable piston 3, the stroke limiter 4 and the thermo-sensitive capsule 6 are therefore aligned one after the other along the longitudinal axis A.

The thermo-sensitive capsule 6 is a component already known and readily available on the market, so it will not be further described.

The heating device 7, on the other hand, preferably comprises an electrical resistor, which is suitably coupled to the thermo-sensitive capsule 6 and is capable of heating, by joule effect, the thermo-sensitive capsule 6 when an electric current is passed through it**.**

With reference to Figures 2, 3, 4 and 5, in turn, the elastic member 5 is preferably substantially tubular in shape, and is preferably fitted onto the stroke limiter 4 so as to take up the space between the tubular sleeve 13 and the same stroke limiter 4.

In addition, the elastic member 5 is interposed between the rigid casing 2 and the stroke limiter 4, or rather between the outer tubular sleeve 13 and the stroke limiter 4, so as to compress when the stroke limiter 4 moves away from the first operating position.

More in detail, the elastic member 5 preferably comprises a coil spring 14, advantageously preloaded in compression, which is preferably fitted on the stroke limiter 4 so as to have a first end in abutment on the tubular sleeve 13, advantageously near the upper end of the same tubular sleeve 13, and a second end in abutment on the stroke limiter 4, advantageously at the lower flanged rim of the same stroke limiter 4.

With reference to Figures 1 to 7, the piston unlocking device 8 is preferably also at least partially accommodated within the tubular sleeve 13 of rigid casing 2.

More specifically, the piston unlocking device 8 is preferably located at the upper/free end of the tubular sleeve 13.

In particular, the piston unlocking device 8 preferably comprises: a movable lid 15 advantageously with a cup structure, which is fitted onto the free/upper end of the tubular sleeve 13 in axially rotatable and preferably also axially slidable manner, and is centrally fixed in rigid manner to the stroke limiter 4 beneath; and an inner cam mechanism 16, which is actuated/controlled directly by the movable lid 15, and is selectively adapted to move the stroke limiter 4 away from the first operating position overcoming the thrust of the elastic member 5, so as to allow the movable piston 3 to move freely back and forth between the forward and the backward position.

More specifically, the movable lid 15 is preferably substantially cylindrical in shape, and is fitted on the free/upper end of tubular sleeve 13 with the capability of rotating with respect to the tubular sleeve 13 about the longitudinal axis A.

In addition, the movable lid 15 is preferably also telescopically fitted on the free/upper end of tubular sleeve 13, so as to slide on the tubular sleeve 13 parallel to the longitudinal axis A. Preferably, the lid 15 is moreover firmly retained in abutment onto the free/upper end of the tubular sleeve 13 by the elastic member 5.

The cam mechanism 16, on the other hand, is preferably adapted to arrange the stroke limiter 4, on choice and alternatively, in the first operating position or in the second operating position depending on the angular position assumed by the movable lid 15.

More in detail, the movable lid 15 is preferably fitted on the free/upper end of tubular sleeve 13 with the capability of rotating, about longitudinal axis A, between a first angular position in which it arranges the stroke limiter 4 in the first operating position, and a second angular position, not coinciding with said first angular position, in which it arranges the stroke limiter 4 in the second operating position. Moreover, the angle between said first and said second angular position is advantageously less than 360°.

Preferably the upper end of tubular sleeve 13 and the movable lid 15 are moreover shaped so as to form, in between them, said cam mechanism 16.

More in detail, the upper end of tubular sleeve 13 and the movable lid 15 are preferably also shaped so as to form, in between them, an axial cam mechanism, which is structured so as to vary, depending on the angular position assumed by the lid 15 with respect to the tubular sleeve 13, the axial distance existing between the lid 15 and the connection interface of rigid casing 2, or rather the cup body 11.

Clearly, since the stroke limiter 4 is integral with the movable lid 15, any axial displacement of the lid 15 parallel to the longitudinal axis A results in an equal axial displacement of the stroke limiter 4, or rather results in an equal change in the axial distance between the stroke limiter 4 and the connection interface of rigid casing 2.

Preferably, the movable lid 15 is instead fitted on the upper end of tubular sleeve 13 with the capability of being manually rotated around the longitudinal axis A by an angle advantageously ranging between 10° and 90°, between said first (Figures 1 and 2) and said second angular position (Figures 5 and 7).

When the movable lid 15 is arranged in the first angular position (Figures 1 and 2), the axial cam mechanism 16 places the movable lid 15 at the minimum axial distance from the connection interface of rigid casing 2, or rather from cup body 11, and the stroke limiter 4 at the minimum axial distance d₀ from the same connection interface, i.e. in the first operating position.

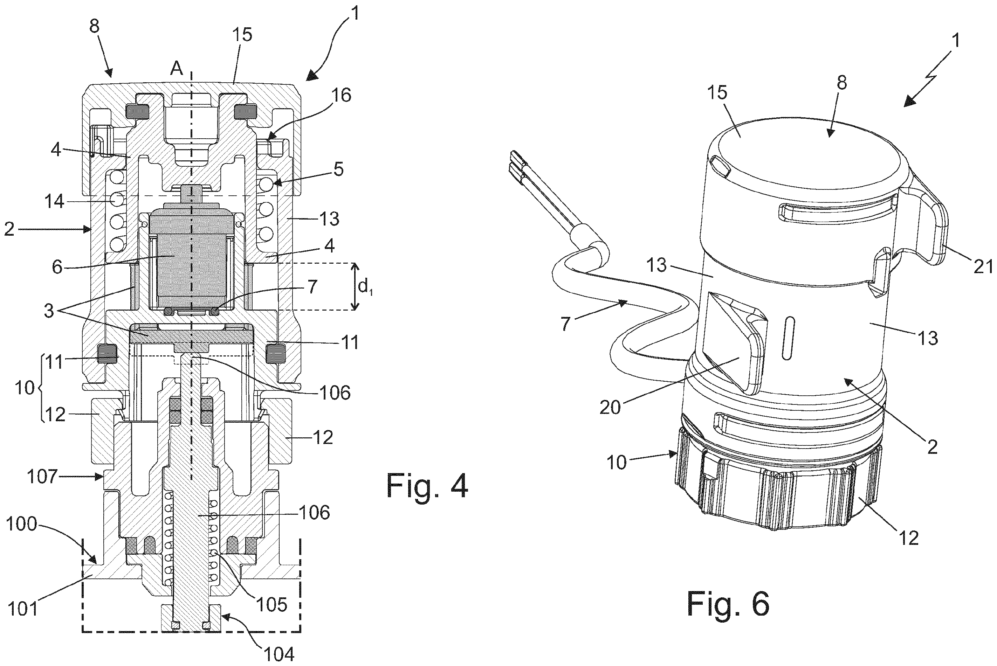

When instead the movable lid 15 is arranged in the second angular position (Figures 5 and 6), the axial cam mechanism 16 places the lid 15 at the maximum axial distance from the connection interface of rigid casing 2, or rather from cup body 11, and the stroke limiter 4 at the maximum axial distance d₂ from the same connection interface, i.e. in the second operating position.

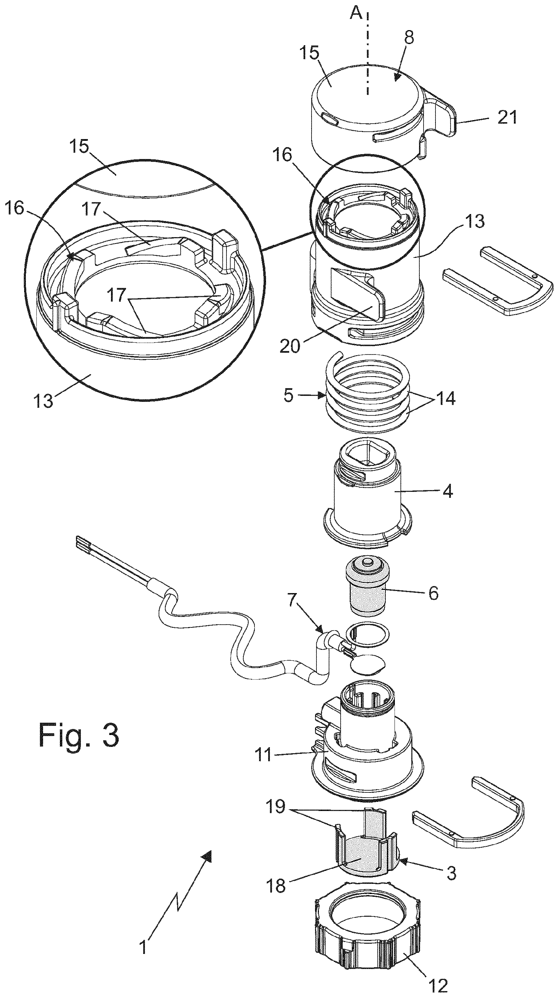

With reference to Figure 3, in the example shown, the cam mechanism 16 preferably comprises: a plurality of teeth 17 with a ramp profile, which are located on the upper end of the tubular sleeve 13, and are angularly evenly spaced around the longitudinal axis A, so as to form a crown of teeth locally coaxial to longitudinal axis A; and a series of runners (not shown in the figures), which are instead located on the bottom of the movable lid 15 so as to be arranged in slidable abutment on the underlying teeth 17 with a ramp profile.

With reference to figures 2, 3, 4, and 5, in turn, the movable piston 3 is preferably provided with one or more rigid protruding appendages, advantageously substantially straight, which extend parallel to the longitudinal axis A engaging the top of cup body 11 in a pass-through and axially slidable manner, so as to protrude cantilevered inside the tubular sleeve 13 and rest on the stroke limiter 4.

More in detail, the movable piston 3 preferably comprises: a disk-shaped plate 18, which engages in axially slidable manner the central cavity of cup body 11, while remaining always substantially perpendicular to longitudinal axis A; and a plurality of straight legs or struts 19, which protrude cantilevered from the disk-shaped plate 18, and extend towards the ceiling of the central cavity parallel to the longitudinal axis A, up to reach and engage in axially slidable manner the ceiling of cup body 11.

In the example shown, in particular, the legs 19 preferably jut out cantilevered from the perimeter edge of the disc-shaped plate 18 and/or are preferably substantially evenly spaced around the longitudinal axis A. In the example shown, moreover, the straight legs 19 protrude cantilevered above the cup body 11, around the tubular collar accommodating the thermo-sensitive capsule 6.

Preferably the straight legs or struts 19 are finally made in one piece with the disc-shaped plate 18 advantageously in plastic material.

With reference to Figures 1, 3, 6 and 7, finally, the outer tubular sleeve 13 and the movable lid 15 are preferably provided with respective projecting appendages 20 and 21 advantageously oblong in shape and/or easily graspable by a person's hand, which extend cantilevered along respective directions substantially orthogonal to the longitudinal axis A, advantageously from opposite sides of the rigid casing 2 of the electrothermal actuator 1.

Preferably, the projecting appendage 20 moreover extends cantilevered from the tubular sleeve 13 substantially tangent to the latter, whereas the projecting appendage 21 extends cantilevered from the lid 15 substantially tangent to the latter.

The projecting appendages 20 and 21 are preferably adapted to arrange themself substantially parallel to each other when the movable lid 15 is in the first angular position (Figures 1, 3 and 6). In addition, the projecting appendages 20 and 21 are preferably adapted to arrange themself converging towards each other when the movable lid 15 is in the second angular position (figure 7).

Operation of the electrothermal actuator 1 is easily inferable from the above.

When the thermo-sensitive capsule 6 is at ambient temperature and the lid 15 is in the first angular position, the elastic member 5 prevents the movable piston 3 from moving axially (backwards) from the forward position to the backward position, i.e. from moving towards the tubular sleeve 13.

As a consequence, when mounted on the hydraulic manifold 100, the electrothermal actuator 1 is capable of maintaining the straight stem 106 in the retracted position by counteracting the elastic thrust of the elastic counter member 105 acting on the straight stem 106.

When, on the other hand, it is heated by the heating device 7 and the lid 15 is in the first angular position, the thermo-sensitive capsule 6 moves the stroke limiter 4 away from the cup body 11 while simultaneously raising the lid 15 from the upper end of the tubular sleeve 13, so as to allow the piston 3 to move freely from the forward position to the backward position, i.e. to move axially towards the thermo-sensitive capsule 6. If mounted on the hydraulic manifold 100, the electrothermal actuator 1 thus allows the straight stem 106 to be moved to shift in the extracted position under the thrust of the elastic counter member 105 acting on the same straight stem 106.

Finally, when lid 15 is in the second angular position, the cam mechanism 16 moves the lid 15 away from the thermo-sensitive capsule 6 beneath while simultaneously placing the stroke limiter 4 in the second operating position, so as to allow the piston 3 to freely move back and forth between the forward and backward positions.

If mounted on the hydraulic manifold 100, the electrothermal actuator 1 thus allows the straight stem 106 to be moved to shift in the extracted position under the thrust of the counter spring element 105 acting on the same straight stem 106.

The advantages connected of the special structure of the electrothermal actuator 1 are remarkable.

The presence of the piston unlocking device 8 allows the electrothermal actuator 1 to be mounted, or rather screwed, onto the valve body 101 of the hydraulic manifold 100 quickly and effortlessly. Prior to the assembly, in fact, the plumber simply has to manually arrange the lid 15 in the second angular position, so that the cam mechanism 16 causes the stroke limiter to move back just enough to allow the movable piston 3 to freely move from the forward position to the backward position and vice versa substantially without resistance.

The presence of the piston unlocking device 8 on the electrothermal actuator 1 moreover allows to manually open and close the inlets of the hydraulic manifold 100 in absence of electricity, facilitating maintenance work on the heating system.

Finally, the presence of the protruding appendages 20 and 21 greatly facilitates the manual operation of the piston unlocking device 8, as it allows the plumber to lock and unlock the movement of the mobile piston 3 using only one hand.

In fact, it suffices to clench the projecting appendages 20 and 21 between thumb and forefinger to moves the same appendages from the configuration in which they are substantially parallel to each other to the configuration in which one converges towards the other.

In addition, the position of the protruding appendages 20 and 21 moreover allows the plumber to determine, at first glance, the state of the piston unlocking device 8 and, consequently, also allows the plumber to determine whether or not the movable plug 104 actuated by the electrothermal actuator 1 closes or not the corresponding inlet of the hydraulic manifold 100.

Finally, it is clear that modifications and variations may be made to the electrothermal actuator 1 and/or the hydraulic manifold 100 without however departing from the scope of the present invention.

For example, in a less sophisticated embodiment, the locking ring-nut 12 of rigid casing 2, or rather of connecting structure 10, may be made in one piece with the cup body 11.

In addition, the valve body 101 of hydraulic manifold 100 may be longitudinally divided into a plurality of modular segments, advantageously substantially identical to one another, which are fluid-tightly couplable/coupled to one another.

## Claims

1. Electrothermal actuator (1) for hydraulic manifolds (100) adapted to axially moving the stem (106) of the movable plug (104) of a hydraulic manifold (100) or the like;
the electrothermal actuator (1) being **characterised by** comprising a rigid casing (2) provided with a connection interface (10), which is adapted to couple to said hydraulic manifold (100) at the stem to be moved (106), so as to rigidly secure the electrothermal actuator (1) to the hydraulic manifold (100); a piston (3), which is axially movable inside the rigid casing (2) between a forward and a backward position, and is adapted to arrange the front part in abutment against the stem to be moved (106); a stroke limiter (4), which is axially movable inside the rigid casing (2), behind the piston (3), and is adapted to limit the axial stroke of said piston (3); an elastic member (5), which is adapted to maintain, in elastic manner, the stroke limiter (4) in a first operating position wherein it prevents the piston (3) from axially moving from said forward position to said backward position; a thermo-sensitive capsule (6), which is adapted to axially move, when expanding, the stroke limiter (4) away from said first operating position; and a manually-operated piston unlocking device (8), which is at least partially housed inside said rigid casing (2) and is adapted to axially move said stroke limiter (4) between said first operating position and a second operating position that allows the piston (3) to move back and forth between the forward position and the backward position.

2. Electrothermal actuator according to claim 1, wherein said rigid casing (2) comprises a protruding tubular sleeve (13) which extends substantially coaxial to a longitudinal axis (A) and is locally aligned to the stroke limiter (4), and wherein the piston unlocking device (8) comprises: a movable lid (15) which is fitted in axially rotatable manner on the free end of the tubular sleeve (13), and is rigidly attached to the stroke limiter (4) beneath; and a cam mechanism (16), which is actuated/controlled directly by the movable lid (15), and is adapted to selectively move the stroke limiter (4) from said first to said second operating position.

3. Electrothermal actuator according to claim 2, in which the cam mechanism (16) is adapted to arrange the stroke limiter (4), on choice and alternatively, in said first or in said second operating position, depending on the angular position taken by the movable lid (15).

4. Electrothermal actuator according to claim 3, wherein the movable lid (15) is rotatably mounted between a first angular position in which it arranges the stroke limiter (4) in the first operating position, and a second angular position, not coincident with said first angular position, in which it arranges the stroke limiter (4) in the second operating position; the angle between said first and said second angular position being advantageously lower than 360°.

5. Electrothermal actuator according to claim 2, 3 or 4, wherein the movable lid (15) has a cup structure.

6. Electrothermal actuator according to any one of claims 2 to 5, wherein the movable lid (15) is moreover fitted in axially slidable manner on the free end of the tubular sleeve (13) and/or is held in abutment on the free end of the tubular sleeve (13) by said elastic member (5).

7. Electrothermal actuator according to any one of claims 2 to 6, wherein the free end of said tubular sleeve (13) and the movable lid (15) are shaped so as to form, between them, said cam mechanism (16).

8. Electrothermal actuator according to any one of claims 2 to 7, wherein the stroke limiter (4), the elastic member (5), the thermo-sensitive capsule (6) and the cam mechanism (16) are located inside said tubular sleeve (13).

9. Electrothermal actuator according to any one of claims 2 to 8, wherein the tubular sleeve (13) and the movable lid (15) are provided with respective oblong projecting appendages (20, 21), which extend cantilevered along respective directions substantially orthogonal to said longitudinal axis (A).

10. Electrothermal actuator according to claim 9, wherein said oblong projecting appendages (20, 21) extend cantilevered from opposite sides of the rigid casing (2).

11. Electrothermal actuator according to claim 9 or 10, wherein said oblong projecting appendages (20, 21) extend cantilevered substantially tangentially, respectively, to said tubular sleeve (13) and to said movable lid (15).

12. Electrothermal actuator according to claim 9, 10 or 11, wherein the movable lid (15) is rotatably mounted between a first angular position wherein the cam mechanism (16) arranges the stroke limiter (4) in the first operating position, and a second angular position, not coincident with said first angular position, wherein the cam mechanism (16) arranges the stroke limiter (4) in the second operating position; said oblong projecting appendages (20, 21) being arranged substantially parallel to each other when the movable lid (15) is in the first angular position.

13. Electrothermal actuator according to claim 9, 10, 11 or 12, wherein the movable lid (15) is rotatably mounted between a first angular position in which the cam mechanism (16) arranges the stroke limiter (4) in the first operating position, and a second angular position, not coincident with said first angular position, in which a cam mechanism (16) arranges the stroke limiter (4) in the second operating position; said oblong projecting appendages (20, 21) being arranged one converging towards the other when the movable lid (15) is in the second angular position.

14. Electrothermal actuator according to any one of the preceding claims, wherein the rigid casing (2) is oblong in shape and said connection interface (10) is located at one end of the rigid casing (2).

15. An electrothermal actuator according to any one of the preceding claims, wherein said connection interface (10) has a bell structure and is adapted to be rigidly fixed onto the hydraulic manifold (100), so as to accommodate therein the segment of the stem to be moved (106) that protrudes cantilevered outside the hydraulic manifold (100); the piston (3) being accommodated in axially slidable manner inside the central cavity of said connection interface (10) with bell structure.

16. Electrically-controlled hydraulic distributor for heating systems comprising: a hydraulic manifold (100) which has a plurality of independent water inlets (103) and a common water outlet (102), and is internally provided with a plurality of movable plugs (104) which are individually movable rectilinearly to and from a closed position in which each of them fluid-tightly obstruct a respective water inlet (103) of the hydraulic manifold (100); and one or more electrothermal actuators (1) that are fixed on said hydraulic manifold (100) each at a respective movable plug (104), so as to move the same movable plug (104) to and from the corresponding closed position;
said electrically-controlled hydraulic distributor being **characterised in that** at least one of said electrothermal actuators (1) is realized according to any one of claims 1 to 15.
